# EUROPEAN PATENT APPLICATION

(11) **EP 4 322 478 A1**
(43) Date of publication of application: **14.02.2024**
(21) Application number: 23190438.4
(22) Date of filing: 09.08.2023
(51) Int. Cl.: H04L 9/40, G06N 3/08, G06N 20/00, H04W 12/04, H04W 12/08

(54) **METHOD, APPARATUS AND COMPUTER PROGRAM**

(30) Priority: 10.08.2022 IN 202241045758
(71) Applicant: Nokia Technologies Oy, 02610 Espoo (FI)
(72) Inventor: AGGARWAL, Chaitanya, Munich (DE); KHARE, Saurabh, Bangalore (IN)
(74) Representative: Nokia EPO representatives

(57) **Abstract**

According to an aspect, there is provided an apparatus comprising means for receiving, from a server, an authorisation request for a federated learning operation, the authorisation request identifying a plurality of user equipments, and means for determining, using subscription data associated with each of the plurality of user equipments, whether each of the plurality of user equipments are authorised to be used by the server for the federated learning operation. The apparatus also comprising means for, in response to determining that at least two of the plurality of user equipments are authorised, providing a message to each of the at least two of the plurality of user equipments that are authorised, each message comprising an encryption key associated with the federated learning operation.

## Description

### Field

The present application relates to a method, apparatus, and computer program for a wireless communication system.

### Background

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

### Summary

According to an aspect, there is provided an apparatus comprising: means for receiving, from a server, an authorisation request for a federated learning operation, the authorisation request identifying a plurality of user equipments; means for determining, using subscription data associated with each of the plurality of user equipments, whether each of the plurality of user equipments are authorised to be used by the server for the federated learning operation; and means for, in response to determining that at least two of the plurality of user equipments are authorised, providing a message to each of the at least two of the plurality of user equipments that are authorised, each message comprising an encryption key associated with the federated learning operation.

In an example, the apparatus comprises: means for generating the encryption key, for the message to be provided to each of the at least two of the plurality of user equipments.

In an example, the apparatus comprises: means for generating an identity for a session, the session associated with the federated learning operation, the identity for the session being provided in the message to each of the at least two of the plurality of user equipments.

In an example, the message comprises an identity of the server.

In an example, the authorisation request comprises an identity of a machine learning model for the federated learning operation, and wherein the message comprises the identity of the machine learning model.

In an example, the apparatus further comprises: means for, in response to determining that at least two the plurality of user equipments are authorised, generating a record for the federated learning operation, the record comprising at least one of: identities of each of the at least two of the plurality of user equipments, the identity of the machine learning model, the identity of the server, the identity of the session, and the encryption key associated with the federated learning operation.

In an example, the record is stored at the apparatus.

In an example, the apparatus further comprises: means for determining which access and mobility management functions each of the at least two of the plurality of user equipments are registered at, using unified data management queries.

In an example, the authorisation request comprises an identity of the federated learning operation, the identity of the server, and identities for each of the at least two of the plurality of user equipments.

In an example, the apparatus further comprises: means for receiving a confirmation message indicating which of the at least two of the plurality of user equipments successfully received the message; and means for, in response to the received confirmation message, providing, to the server, i) an indication of which of the at least two of the plurality of user equipments successfully received the message, and ii) the identity of the session.

In an example, the message comprises an identity of the respective user equipment receiving the message.

In an example, the encryption key is a secret key.

In an example, the messages to each of the at least two of the plurality of user equipments are provided via an access and mobility management function service.

In an example, the apparatus comprises a network function, is the network function, or is comprised in the network function.

According to an aspect, there is provided an apparatus comprising: means for receiving, from a network function, a message comprising an encryption key associated with a federated learning operation; means for receiving, from the server, a machine learning model of the federated learning operation; means for training the machine learning model at the user equipment to output model parameters; means for encrypting the model parameters using the encryption key; and means for providing the encrypted model parameters to the server.

In an example, wherein the message comprises at least one of: an identity of the server, and an identity for a session, wherein the session is associated with the federated learning operation.

In an example, the apparatus further comprises: means for receiving, from the server, aggregated encrypted model parameters of a plurality of user equipments.

In an example, the apparatus further comprises: means for decrypting the aggregated encrypted model parameters using the encryption key.

In an example, the apparatus further comprises: means for retraining the machine learning model using the decrypted aggregated model parameters.

In an example, the message comprising an identity of a server, and an encryption key associated with a federated learning operation is received within a non-access stratum container.

In an example, the apparatus further comprises: means for providing, to an application management function, an acknowledgement that the message has been received successfully.

In an example, the machine learning model received from the server comprises at least one of: initial model parameters to use, an identity of a session, an identity of the machine learning model, and an identity of the server.

In an example, the means for encrypting comprises means for performing a homomorphic encryption.

In an example, the apparatus comprises a user equipment, is the user equipment, or is comprised in the user equipment.

According to an aspect, there is provided an apparatus comprising: means for providing, to a network function, an authorisation request for a federated learning operation, the authorisation request identifying a plurality of user equipments; means for, in response to receiving a confirmation message, providing a machine learning model of the federated learning operation to at least two of the plurality of user equipments; means for receiving, from each of the at least two of the plurality of user equipments, encrypted model parameters associated with the machine learning model; means for aggregating the encrypted model parameters from each of the at least two of the plurality of user equipments together.

In examples, the confirmation message comprises an indication that data related to the federated learning operation has been successfully delivered to the plurality of user equipments.

In an example, the apparatus comprises: means for providing the aggregated encrypted model parameters to each of the at least two of the plurality of user equipments.

In an example, the apparatus comprises: means for receiving, from each of the at least two of the plurality of user equipments, further encrypted model parameters associated with the machine learning model, wherein the further encrypted model parameters are associated with the aggregated encrypted model parameters.

In an example, the apparatus comprises a server, is the server, or is comprised in the server.

In an example, the server is an application function or an application server.

According to an aspect, there is provided a method comprising: receiving, from a server, an authorisation request for a federated learning operation, the authorisation request identifying a plurality of user equipments; determining, using subscription data associated with each of the plurality of user equipments, whether each of the plurality of user equipments are authorised to be used by the server for the federated learning operation; and in response to determining that at least two of the plurality of user equipments are authorised, providing a message to each of the at least two of the authorised plurality of user equipments, each message comprising an encryption key associated with the federated learning operation.

In an example, the method comprises: generating the encryption key, for the message to be provided to each of the at least two of the plurality of user equipments.

In an example, the method comprises: generating an identity for a session, the session associated with the federated learning operation, the identity for the session being provided in the message to each of the at least two of the plurality of user equipments.

In an example, the message comprises an identity of the server.

In an example, the authorisation request comprises an identity of a machine learning model for the federated learning operation, and wherein the message comprises the identity of the machine learning model.

In an example, the method comprises: in response to determining that at least two the plurality of user equipments are authorised, generating a record for the federated learning operation, the record comprising at least one of: identities of each of the at least two of the plurality of user equipments, the identity of the machine learning model, the identity of the server, the identity of the session, and the encryption key associated with the federated learning operation.

In an example, the method comprises: determining which access and mobility management functions each of the at least two of the plurality of user equipments are registered at, using unified data management queries.

In an example, the authorisation request comprises an identity of the federated learning operation, the identity of the server, and identities for each of the at least two of the plurality of user equipments.

In an example, the method comprises: receiving a confirmation message indicating which of the at least two of the plurality of user equipments successfully received the message; and in response to the received confirmation message, providing, to the server, i) an indication of which of the at least two of the plurality of user equipments successfully received the message, and ii) the identity of the session.

In an example, the message comprises an identity of the respective user equipment receiving the message.

In an example, the encryption key is a secret key.

In an example, the messages to the at least two of plurality of user equipments are provided via an access and mobility management function service.

In an example, the method is performed by a network function.

According to an aspect, there is provided a method comprising: receiving, from a network function, a message comprising an encryption key associated with a federated learning operation; receiving, from the server, a machine learning model of the federated learning operation; training the machine learning model at the user equipment to output model parameters; encrypting the model parameters using the encryption key; and providing the encrypted model parameters to the server.

In an example, the message comprises at least one of: an identity of the server, and an identity for a session, wherein the session is associated with the federated learning operation.

In an example, the method comprises: receiving, from the server, aggregated encrypted model parameters of a plurality of user equipments.

In an example, the method comprises: decrypting the aggregated encrypted model parameters using the encryption key.

In an example, the method comprises: retraining the machine learning model using the decrypted aggregated model parameters.

In an example, the message comprising an identity of a server, and an encryption key associated with a federated learning operation is received within a non-access stratum container.

In an example, the method comprises: providing, to an application management function, an acknowledgement that the message has been received successfully.

In an example, the machine learning model received from the server comprises at least one of: initial model parameters to use, an identity of a session, an identity of the machine learning model, and an identity of the server.

In an example, the encrypting comprises performing a homomorphic encryption.

In an example, the method is performed by a user equipment.

According to an aspect, there is provided a method comprising: providing, to a network function, an authorisation request for a federated learning operation, the authorisation request identifying a plurality of user equipments; in response to receiving a confirmation message, providing a machine learning model of the federated learning operation to at least two of the plurality of user equipments; receiving, from the at least two of plurality of user equipments, encrypted model parameters associated with the machine learning model; and aggregating the encrypted model parameters from each of the at least two of the plurality of user equipments together.

In an example, the method comprises: providing the aggregated encrypted model parameters to each of the at least two of the plurality of user equipments.

In an example, the method comprises: receiving, from each of the at least two of the plurality of user equipments, further encrypted model parameters associated with the machine learning model, wherein the further encrypted model parameters are associated with the aggregated encrypted model parameters.

In an example, the method is performed by server.

In an example, the server is an application function or an application server.

According to an aspect, there is provided an apparatus comprising: at least one processor; and at least one memory storing instructions that, when executed by the at least one processor, cause the apparatus at least to: receiving, from a server, an authorisation request for a federated learning operation, the authorisation request identifying a plurality of user equipments; determining, using subscription data associated with each of the plurality of user equipments, whether each of the plurality of user equipments are authorised to be used by the server for the federated learning operation; and in response to determining that at least two of the plurality of user equipments are authorised, providing a message to each of the at least two of the plurality of user equipments that are authorised, each message comprising an encryption key associated with the federated learning operation.

In an example, the apparatus is caused to perform: generating the encryption key, for the message to be provided to each of the at least two of the plurality of user equipments.

In an example, the apparatus is caused to perform: generating an identity for a session, the session associated with the federated learning operation, the identity for the session being provided in the message to each of the at least two of the plurality of user equipments.

In an example, the message comprises an identity of the server.

In an example, the authorisation request comprises an identity of a machine learning model for the federated learning operation, and wherein the message comprises the identity of the machine learning model.

In an example, the apparatus is caused to perform: in response to determining that at least two the plurality of user equipments are authorised, generating a record for the federated learning operation, the record comprising at least one of: identities of each of the at least two of the plurality of user equipments, the identity of the machine learning model, the identity of the server, the identity of the session, and the encryption key associated with the federated learning operation.

In an example, the apparatus is caused to perform: determining which access and mobility management functions each of the at least two of the plurality of user equipments are registered at, using unified data management queries.

In an example, the authorisation request comprises an identity of the federated learning operation, the identity of the server, and identities for each of the at least two of the plurality of user equipments.

In an example, the apparatus is caused to perform: receiving a confirmation message indicating which of the at least two of the plurality of user equipments successfully received the message; and in response to the received confirmation message, providing, to the server, i) an indication of which of the at least two of the plurality of user equipments successfully received the message, and ii) the identity of the session.

In an example, the message comprises an identity of the respective user equipment receiving the message.

In an example, the encryption key is a secret key.

In an example, the messages to the at least two of plurality of user equipments are provided via an access and mobility management function service.

In an example, the apparatus comprises a network function, is the network function, or is comprised in the network function.

According to an aspect, there is provided an apparatus comprising: at least one processor; and at least one memory storing instructions that, when executed by the at least one processor, cause the apparatus at least to: receiving, from a network function, a message comprising an encryption key associated with a federated learning operation; receiving, from the server, a machine learning model of the federated learning operation; training the machine learning model at the user equipment to output model parameters; encrypting the model parameters using the encryption key; and providing the encrypted model parameters to the server.

In an example, the message comprises at least one of: an identity of the server, and an identity for a session, wherein the session is associated with the federated learning operation.

In an example, the apparatus is caused to perform: receiving, from the server, aggregated encrypted model parameters of a plurality of user equipments.

In an example, the method comprises: decrypting the aggregated encrypted model parameters using the encryption key.

In an example, the apparatus is caused to perform: retraining the machine learning model using the decrypted aggregated model parameters.

In an example, the message comprising an identity of a server, and an encryption key associated with a federated learning operation is received within a non-access stratum container.

In an example, the apparatus is caused to perform: providing, to an application management function, an acknowledgement that the message has been received successfully.

In an example, the machine learning model received from the server comprises at least one of: initial model parameters to use, an identity of a session, an identity of the machine learning model, and an identity of the server.

In an example, the encrypting comprises performing a homomorphic encryption.

In an example, the apparatus comprises a user equipment, is the user equipment, or is comprised in the user equipment.

According to an aspect, there is provided an apparatus comprising: at least one processor; and at least one memory storing instructions that, when executed by the at least one processor, cause the apparatus at least to: providing, to a network function, an authorisation request for a federated learning operation, the authorisation request identifying a plurality of user equipments; in response to receiving a confirmation message, providing a machine learning model of the federated learning operation to at least two of the plurality of user equipments; receiving, from the at least two of plurality of user equipments, encrypted model parameters associated with the machine learning model; and aggregating the encrypted model parameters from each of the at least two of the plurality of user equipments together.

In an example, the apparatus is caused to perform: providing the aggregated encrypted model parameters to each of the at least two of the plurality of user equipments.

In an example, the apparatus is caused to perform: receiving, from each of the at least two of the plurality of user equipments, further encrypted model parameters associated with the machine learning model, wherein the further encrypted model parameters are associated with the aggregated encrypted model parameters.

In an example, the apparatus comprises a server, is the server, or is comprised in the server.

In an example, the server is an application function or an application server.

According to an aspect, there is provided a computer program comprising instructions stored thereon for performing at least the following: receiving, from a server, an authorisation request for a federated learning operation, the authorisation request identifying a plurality of user equipments; determining, using subscription data associated with each of the plurality of user equipments, whether each of the plurality of user equipments are authorised to be used by the server for the federated learning operation; and in response to determining that at least two of the plurality of user equipments are authorised, providing a message to each of the at least two of the plurality of user equipments that are authorised, each message comprising an encryption key associated with the federated learning operation.

According to an aspect, there is provided a computer program comprising instructions stored thereon for performing at least the following: receiving, from a network function, a message comprising an encryption key associated with a federated learning operation; receiving, from the server, a machine learning model of the federated learning operation; training the machine learning model at the user equipment to output model parameters; encrypting the model parameters using the encryption key; and providing the encrypted model parameters to the server.

According to an aspect, there is provided a computer program comprising instructions stored thereon for performing at least the following: providing, to a network function, an authorisation request for a federated learning operation, the authorisation request identifying a plurality of user equipments; in response to receiving a confirmation message, providing a machine learning model of the federated learning operation to at least two of the plurality of user equipments; receiving, from the at least two of plurality of user equipments, encrypted model parameters associated with the machine learning model; and aggregating the encrypted model parameters from each of the at least two of the plurality of user equipments together.

According to an aspect, there is provided a non-transitory computer readable medium comprising program instructions, that, when executed by an apparatus, cause the apparatus to perform: receiving, from a server, an authorisation request for a federated learning operation, the authorisation request identifying a plurality of user equipments; determining, using subscription data associated with each of the plurality of user equipments, whether each of the plurality of user equipments are authorised to be used by the server for the federated learning operation; and in response to determining that at least two of the plurality of user equipments are authorised, providing a message to each of the at least two of the plurality of user equipments that are authorised, each message comprising an encryption key associated with the federated learning operation.

According to an aspect, there is provided a non-transitory computer readable medium comprising program instructions, that, when executed by an apparatus, cause the apparatus to perform: receiving, from a network function, a message comprising an encryption key associated with a federated learning operation; receiving, from the server, a machine learning model of the federated learning operation; training the machine learning model at the user equipment to output model parameters; encrypting the model parameters using the encryption key; and providing the encrypted model parameters to the server.

According to an aspect, there is provided a non-transitory computer readable medium comprising program instructions, that, when executed by an apparatus, cause the apparatus to perform: providing, to a network function, an authorisation request for a federated learning operation, the authorisation request identifying a plurality of user equipments; in response to receiving a confirmation message, providing a machine learning model of the federated learning operation to at least two of the plurality of user equipments; receiving, from the at least two of plurality of user equipments, encrypted model parameters associated with the machine learning model; and aggregating the encrypted model parameters from each of the at least two of the plurality of user equipments together.

A computer product stored on a medium may cause an apparatus to perform the methods as described herein.

According to an aspect, there is provided a computer program comprising instructions, which when executed by an apparatus, cause the apparatus to perform the methods as described herein.

An electronic device may comprise apparatus as described herein.

In the above, various aspects have been described. It should be appreciated that further aspects may be provided by the combination of any two or more of the various aspects described above.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

### List of abbreviations:

- AF:: Application Function
- AI:: Artificial Intelligence
- AMF:: Access Management Function
- AN:: Access Network
- BS:: Base Station
- CN:: Core Network
- DL:: Downlink
- eNB:: eNodeB
- FL:: Federated Learning
- gNB:: gNodeB
- IIoT:: Industrial Internet of Things
- LTE:: Long Term Evolution
- NAS:: Non-Access Stratum
- NEF:: Network Exposure Function
- NG-RAN:: Next Generation Radio Access Network
- NF:: Network Function
- NR:: New Radio
- NRF:: Network Repository Function
- NW:: Network
- ML:: Machine Learning
- MS:: Mobile Station
- PCF: Policy Control Function
- PLMN:: Public Land Mobile Network
- RAN:: Radio Access Network
- RF:: Radio Frequency
- SMF:: Session Management Function
- UE:: User Equipment
- UDR:: Unified Data Repository
- UDM:: Unified Data Management
- UL:: Uplink
- UPF:: User Plane Function
- 3GPP:: 3^{rd} Generation Partnership Project
- 5G:: 5^{th} Generation
- 5GC:: 5G Core network
- 5G-AN:: 5G Radio Access Network
- 5GS:: 5G System

### Description of Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a terminal;
Figure 4 shows a schematic representation a system for federated learning;
Figures 5a and 5b show an example signalling diagram between network functions and a plurality of user equipments;
Figure 6 shows an example method flow diagram performed by a network function;
Figure 7 shows an example method flow diagram performed by a user equipment;
Figure 8 shows an example method flow diagram performed by a server; and
Figure 9 shows a schematic representation of a non-volatile memory medium storing instructions which when executed by a processor allow a processor to perform one or more of the steps of the method of Figures 6 to 8.

### Detailed description

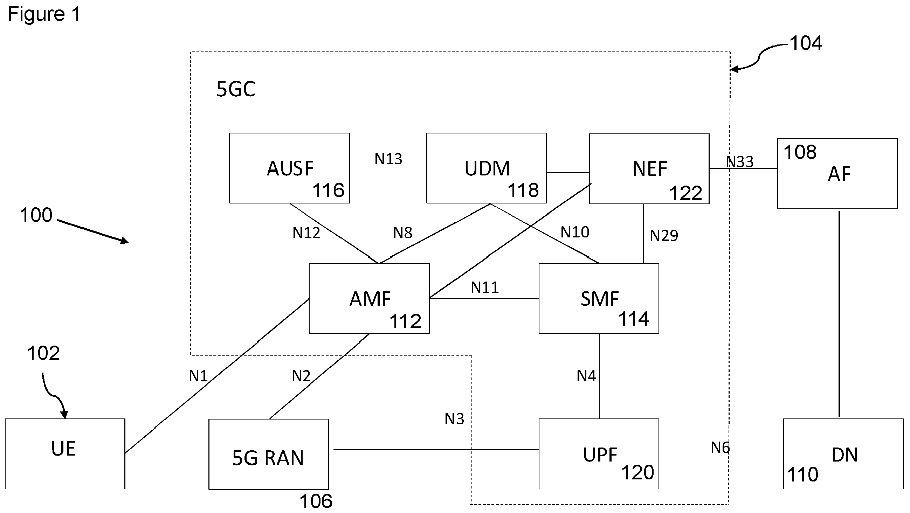

Before explaining in detail some examples of the present disclosure, certain general principles of a wireless communication system and mobile communication devices are briefly explained with reference to Figures 1 to 3 to assist in understanding the technology underlying the described examples.

In a wireless communication system 100, such as that shown in Figure 1, mobile communication devices/terminals or user apparatuses, and/or user equipments (UE), and/or machine-type communication devices 102 are provided wireless access via at least one base station (not shown) or similar wireless transmitting and/or receiving node or point. A communication device is provided with an appropriate signal receiving and transmitting apparatus for enabling communications, for example enabling access to a communication network or communications directly with other devices. The communication device may access a carrier provided by a station or access point, and transmit and/or receive communications on the carrier.

In the following certain examples are explained with reference to mobile communication devices capable of communication via a wireless cellular system and mobile communication systems serving such mobile communication devices. Before explaining in detail the examples of disclose, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS) 100. The 5GS may comprises a device 102 such as user equipment or terminal, a 5G radio access network (5G-RAN) 106, a 5G core network (5GC) 104, one or more network functions (NF), one or more application function (AF) 108 and one or more data networks (DN) 110.

The 5G-RAN 106 may comprise one or more gNodeB (gNB) distributed unit functions connected to one or more gNodeB (gNB) centralized unit functions.

The 5GC 104 may comprise an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 4G, 3G and other 3GPP standards.

In a communication system, such as that shown in Figure 1, mobile communication devices/terminals or user apparatuses, and/or user equipments (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a station or access point, and transmit and/or receive communications on the carrier.

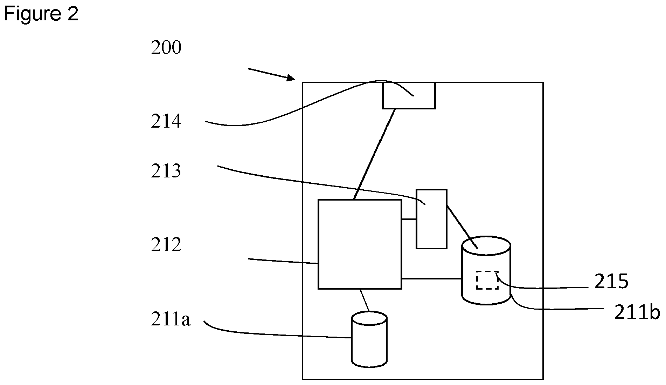

Figure 2 illustrates an example of a control apparatus 200 for controlling a function of the 5G-RAN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G-AN or the 5GC. In some examples, each function of the 5G-AN or the 5GC comprises a control apparatus 200. In alternative examples, two or more functions of the 5G-AN or the 5GC may share a control apparatus.

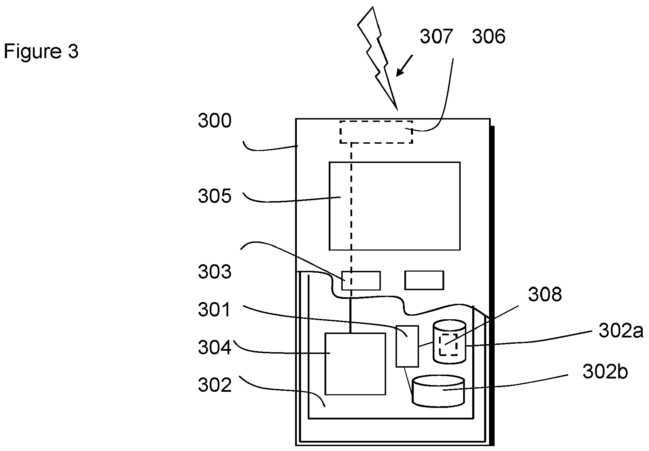

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus may be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

Machine learning (ML) is a field of inquiry devoted to understanding and building methods that 'learn', by leveraging data to improve performance on a set of tasks. ML is a part of artificial intelligence. ML algorithms build a model based on sample data, known as training data, in order to make predictions or decisions without being explicitly programmed to do so. Trained ML models may then be operationalised (also referred to as inference) to perform a task. ML model inference is the use of an ML model to process live input data to produce an output.

Federated learning (FL) is an ML technique that trains an ML model/algorithm across multiple devices or servers holding local data samples, without exchanging the data samples. The multiple devices/servers may be decentralized edge devices. FL is also known as collaborative learning (CL) in some fields.

The FL approach is different to traditional, centralized, ML techniques where all the local datasets are uploaded to one server, as well as to more classical decentralized approaches which may assume that local data samples are identically distributed. FL enables entities to build a common ML model without sharing data across the devices performing the ML operations. This may address issues such as data privacy, data security, data access rights and access to heterogeneous data.

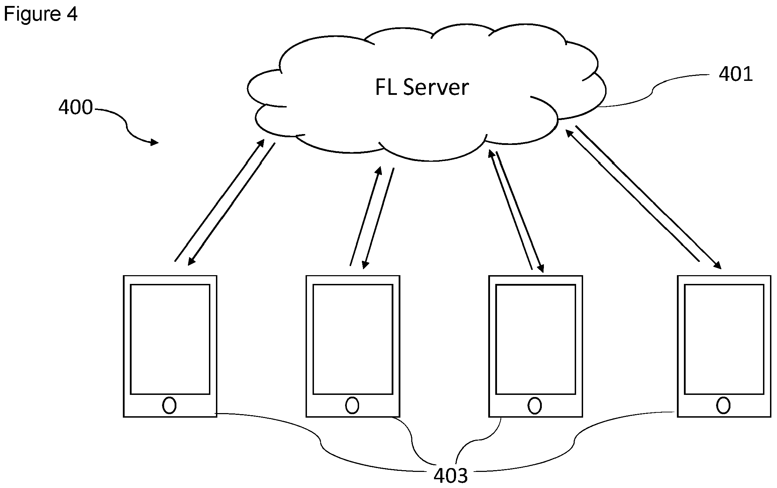

Figure 4 shows a schematic representation a system for federated learning. The system 400 comprises an FL server 401. The FL server 401 may be hosted by a network function, such as for example, an application function. The system 400 also comprises four UEs 403. The FL server 401 may have selected the four UEs 403 to perform operations associated with an ML model.

The four UEs 403 are configured to communicate with the FL server 401. The FL server provides one or more ML models to the four UEs for training and/or inference. The four UEs will train and/or operationalise the one or more MLs and provide the outputs to the FL servers. Each of the four UEs 403 will use respective data located at each of the four UEs 403 when training and/or operationalising the one or more ML models. The FL server 401 may aggregate the received outputs from the four UEs 403. In this way, the entities of the system 400 exchange parameters (e.g. the weights and biases of an ML model/deep neural network) between these local nodes (i.e. the four UEs 403) at a frequency to generate a global model, shared by all entities.

It should be understood that the system 400 may comprise any suitable number of UEs (and/or other devices) for an FL operation.

With an FL training model, an application server (AS) (or application function (AF)) may select a set of UEs/devices to participate in a distributed ML training session. Each training session may include several training cycles. During each cycle, a set of UEs is selected by the AS responsible for training a global model. In some scenarios, an AS will repeatedly re-select a group of UEs performing 'well'. However, frequently shuffling the participants UEs may also be useful to improve the training results. The more diverse the participants are in a training session, the more diverse the environments/datasets are being used in training, which may result in a more accurate output/result.

However, due to the nature of FL involving multiple devices/UEs, this introduces potentially more serious threats than other ML models as the training data may be learnt by analysing the parameters sent by the UEs to the FL server during a model aggregation phase. Therefore, even if the UEs are performing a local training using privacy sensitive data, that sensitive data may still be learnt by the AS by analysing the model parameters sent by the UEs. This may lead to a privacy breach and is a potential threat if malicious nodes are part of the system.

One or more of the following examples aim to address one or more of the problems identified above.

In examples, there is provided a key distribution and management mechanism which includes sending an encryption key to user equipments via NAS messages, wherein the encryption key is used to encrypt federated learning model parameters at the user equipments. This ensures that UE data remains private during an FL operation between FL servers, network functions and UEs. This will be described in more detail below.

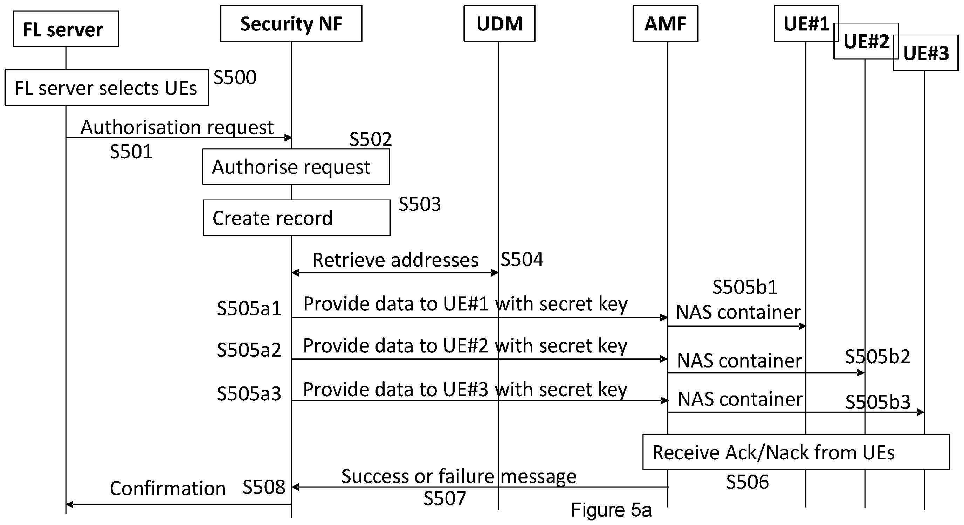

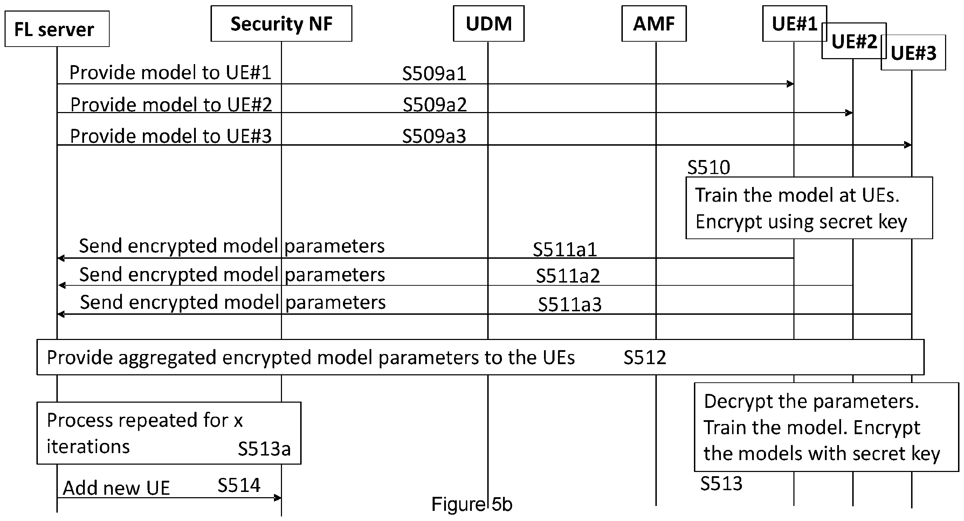

Figures 5a and 5b show an example signalling diagram between network functions and a plurality of user equipments.

Figure 5a shows:
At S500, a server selects a plurality of user equipments (UEs) for a federated learning (FL) operation. The FL operation has an associated model identity (ID). The server may be an FL server. The server may be located at an application server, or an application function.

In this example, the plurality of UEs refers to the three UEs: UE#1, UE#2, and UE#3. In this example, the server selects three UEs. In other examples, more or less than three UEs may be selected. In other examples, other types of devices are selected.

At S501, the server provides an authorisation request message to a network function (NF). In this example, the NF is referred to as a security NF. The security NF may be part of the 5GC.

The authorisation request comprises information related to the FL operation. For example, the authorisation request may comprise at least one of: IDs of the plurality of UEs, the model ID, and an ID of the server.

At S502, the security NF determines whether the plurality of user equipments are authorised to be used by the server for the FL operation. The security NF may perform the determination using subscription data associated with each of the plurality of user equipments, in some examples. The security NF may determine whether each UE has given permission for the FL operation/ML model, within the subscription data.

The security NF may use at least one of: the model ID, and the ID of the server, when determining whether the plurality of UEs should be authorised.

At S503, it is assumed that the plurality of UEs are authorised. Once authorised, the security NF creates/generates a record for the FL operation. In other examples, a subset of a plurality of user equipments may be authorised for the FL operation (i.e. some UEs are not authorised). In this case, the security NF will proceed (only) with the authorised user equipments of the plurality of the user equipments. For example, at least two of a plurality of UEs may be authorised.

For the following steps of this example of Figure 5, the plurality of UEs have been determined to be authorised for the FL operation.

The record may comprise at least one of: IDs of the plurality of UEs, the model ID, the server ID, an ID for the session (session ID), and an encryption key.

The session ID is generated at the security NF. The session ID may be used so that multiple sessions can occur in parallel (i.e. multiple sessions as the same time).

The encryption key is shared between all of the plurality of UEs.

The encryption key is generated by the security NF. The encryption key may be a secret key. The encryption key may be used for both encryption and decryption.

When the encryption key is a secret key, as it is common secret key for all of the UEs, details associated with any of the UEs are not used in the key generation.

At S504, the security NF determines where each authorised UE of the plurality of UEs are registered. Each UE will be registered with at least one AMF. The security NF may perform UDM queries, using the respective IDs of the UEs, to determine the at least one AMF of registration.

At S505, the security NF provides a message to each AMF associated with each the plurality of UEs. The security NF knows the associated AMF from the determination performed in S504. Each AMF will provide the contents of the message to each UE within a non-access stratum (NAS) container.

The message may comprise at least one of: the server ID, the session ID, the encryption key, and the respective UE ID.

At S505a1, the security NF provides the message to the AMF associated with a first UE (UE#1) of the plurality of UEs.

At S505b1, the AMF provides the contents of the message to the first UE within an NAS container.

At S505a2, the security NF provides the message to the AMF associated with a second UE (UE#2) of the plurality of UEs.

At S505b2, the AMF provides the contents of the message to the second UE within an NAS container.

At S505a3, the security NF provides the message to the AMF associated with a third UE (UE#3) of the plurality of UEs.

At S505b3, the AMF provides the contents of the message to the third UE within an NAS container.

In Figure 5a, the same AMF is indicated as being registered with all three UEs. It should be understood that the UEs may each be registered with different AMFs.

At S506, each of the plurality of UEs provide an indication to their registered AMF that the message has been received successfully. It should be understood that in some situations, one or more of the UEs may indicate that the message has not been received successfully. In that case, the AMF may attempt to re-send the message.

At S507, the AMF (or AMFs) provides a success message to the security NF, to indicate to the security NF that the respective UEs have received the information of the message successfully. In other examples, one or more of the AMFs may instead provide a failure message to the security NF.

At S508, in response to receiving the confirmation from the AMF (or AMFs), the security NF provides a list of confirmation UEs to the server. This informs the server which (if not all) of the plurality of UEs may be used for the ML model transfer.

In this example of Figure 5a, it is assumed that all of the three UEs received the message successfully, and that the server is informed of this success.

The security NF may also provide the session ID to the server. The server may use the session ID when communicating with the plurality of UEs (later in the signalling flow).

Figure 5b shows:
At S509, in response to receiving the confirmation of S508, the server provides an ML model of the FL operation to the plurality of UEs (i.e. UE#1, UE#2, UE#3). In some examples, the server provides a plurality of different ML models of the FL operation.

In addition to the ML model, the server may also provide to the UEs at least one of: initial model parameters associated with the ML model, the session ID, the model ID, and the server ID.

At S509a1, the server provides the ML model to UE#1.

At S509a2, the server provides the ML model to UE#2.

At S509a3, the server provides the ML model to UE#3.

At S510, each of the plurality of UEs trains the ML model (at the respective UE) to output model parameters. In this way, the UEs function as FL clients to perform local training of the ML model.

Each of the plurality of UEs encrypts the model parameters using the received encryption key. The UEs may encrypt the model parameters using homomorphic encryption. Homomorphic encryption being form of encryption that permits users to perform computations on the encrypted data without first decrypting it. In other examples, other types of encryption are performed by the UE.

Each of the plurality of may encrypt the model parameters using the encryption key while correlating via the received session ID.

At S511, each of the plurality of UEs provides the encrypted model parameters to the server.

At S511a1, the first UE provides the encrypted model parameters, that were outputted by the training of the ML model at the first UE, to the server.

At S511a1, the second UE provides the encrypted model parameters, that were outputted by the training of the ML model at the second UE, to the server.

At S511a1, the third UE provides the encrypted model parameters, that were outputted by the training of the ML model at the third UE, to the server.

The (secret) encryption key is used by the FL clients (i.e. the UEs) to encrypt and decrypt any messages or information. As the (secret) encryption key is available at the FL clients (and not the server itself), the server cannot decrypt the content.

At S512, following the reception of the model parameters from the UEs, the server performs an aggregation of the encrypted model parameters received from the plurality of UEs.

The server then provides the aggregated encrypted model parameters to each of the plurality of UEs.

In this way, the server processes the encrypted data at the server (by aggregating the encrypted data). The server does not decrypt the data before the processing.

At S513, each of the plurality of UEs decrypts the received aggregated encrypted model parameters using the encryption key. It should be understood that the encryption key also functions as a decryption key.

The decrypted aggregated model parameters will be referred to as updated model parameters.

Each of the plurality of UEs then uses the updated model parameters to train the ML model to output further model parameters.

Each of the plurality of UEs then encrypts the further model parameters using the encryption key.

The plurality of UEs may then provide the encrypted further model parameters to the server.

Once the encrypted further model parameters are received at the server, the server may aggregate the encrypted further model parameters together.

At S513a, the process (S510 to S513) is repeated for a given number of iterations. Alternatively, the process is repeated until the ML model reaches its convergence. Once the iterations are finished or the model has reached the convergence, the server provides the 'final' encrypted aggregated model parameters to the UEs (i.e. the FL clients).

At S514, a new UE (i.e. a new FL client) is selected by the server. The new UE may be selected in addition to the current UEs. In other examples, the new UE may replace one or more of the currently selected UEs.

The server sends the new UE's information to the security NF, and then steps S512 to S513 are then repeated for the new UE.

It should be understood that one or more of the steps described above in Figures 5a and 5b may be missed in some examples. Furthermore, one or more of the steps of Figures 5a and 5b may be performed in different orders than described above.

One or more of examples described above provides a process for federated learning operations to function between multiple entities in a system, whereby privacy of data is ensured for the federated learning clients. The FL server which is able to access data from a plurality of different FL clients is not able to access any personal or sensitive data that may be associated or provided by the FL client when providing that data to the FL server for the FL operation. Therefore, a process is provided with improved privacy and security.

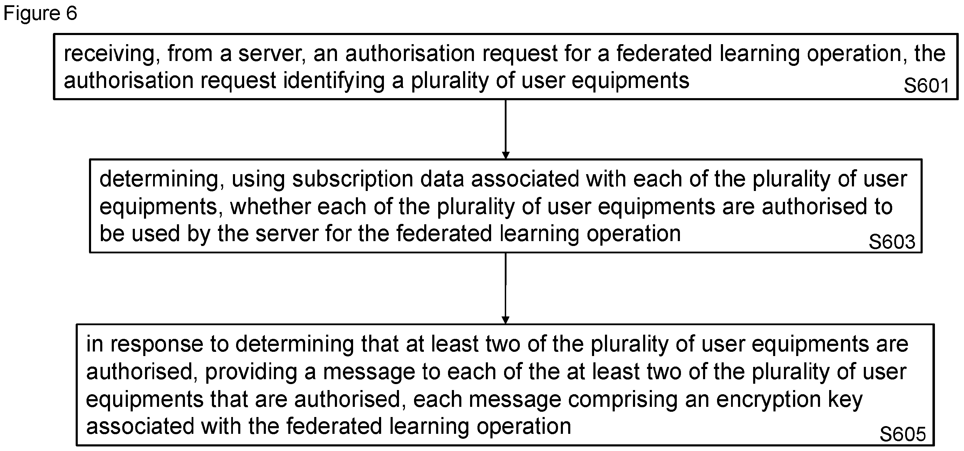

Figure 6 shows an example method flow performed by an apparatus. The apparatus may be comprised within a network function. In an example, the network function may be a network function. The apparatus may be the network function.

In S601, the method comprises receiving, from a server, an authorisation request for a federated learning operation, the authorisation request identifying a plurality of user equipments.

In S603, the method comprises determining, using subscription data associated with each of the plurality of user equipments, whether each of the plurality of user equipments are authorised to be used by the server for the federated learning operation.

In S605, the method comprises in response to determining that at least two of the plurality of user equipments are authorised, providing a message to each of the at least two of the plurality of user equipments that are authorised, each message comprising an encryption key associated with the federated learning operation.

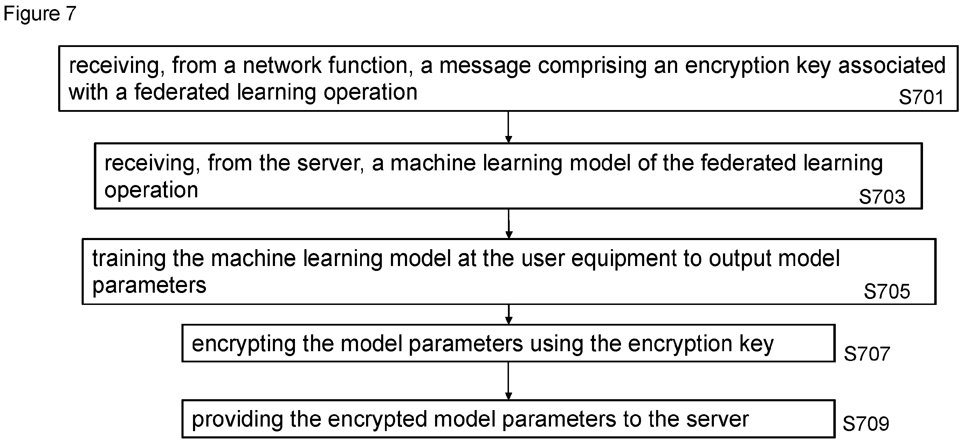

Figure 7 shows an example method flow performed by an apparatus. The apparatus may be comprised within a user equipment. The apparatus may be the user equipment.

In S701, the method comprises receiving, from a network function, a message comprising an encryption key associated with a federated learning operation;

In S703, the method comprises receiving, from the server, a machine learning model of the federated learning operation.

In S705, the method comprises training the machine learning model at the user equipment to output model parameters.

In S707, the method comprises encrypting the model parameters using the encryption key.

In S709, the method comprises providing the encrypted model parameters to the server.

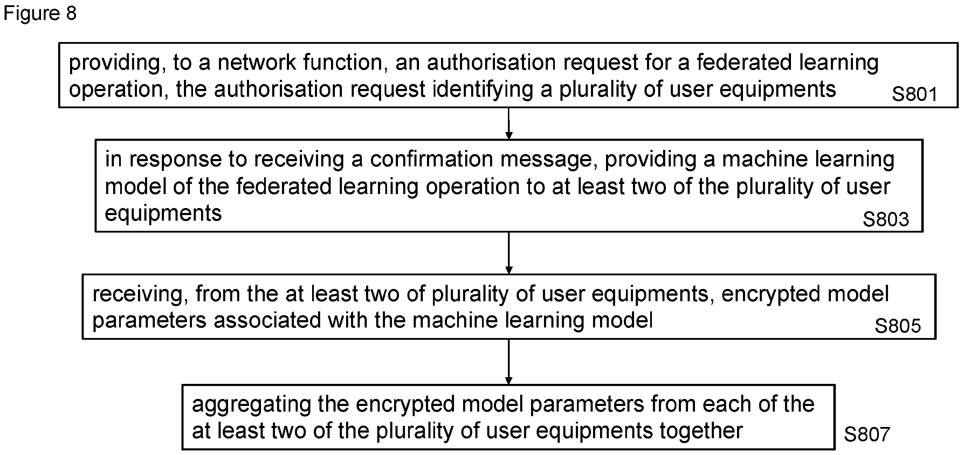

Figure 8 shows an example method flow performed by an apparatus. The apparatus may be comprised within a network function. In an example, the apparatus may be comprised within a server. The apparatus may be the server. The server may be an FL server.

In S801, the method comprises providing, to a network function, an authorisation request for a federated learning operation, the authorisation request identifying a plurality of user equipments.

In S803, the method comprises in response to receiving a confirmation message, providing a machine learning model of the federated learning operation to at least two of the plurality of user equipments.

In S805, the method comprises receiving, from the at least two of plurality of user equipments, encrypted model parameters associated with the machine learning model.

In S807, the method comprises aggregating the encrypted model parameters from each of the at least two of the plurality of user equipments together.

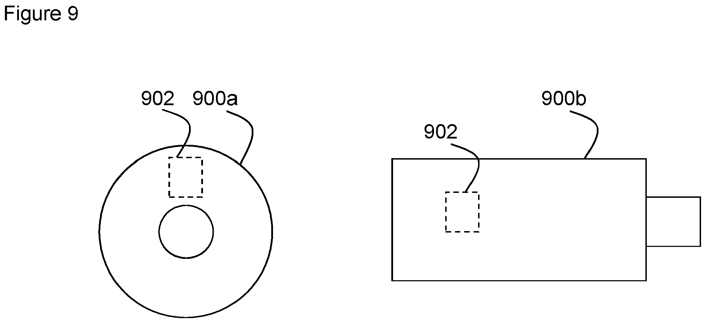

Figure 9 shows a schematic representation of non-volatile memory media 900a (e.g. computer disc (CD) or digital versatile disc (DVD)) and 900b (e.g. universal serial bus (USB) memory stick) storing instructions and/or parameters 902 which when executed by a processor allow the processor to perform one or more of the steps of the methods of Figure 6, Figure 7 or Figure 8.

It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The term "non-transitory", as used herein, is a limitation of the medium itself (i.e. tangible, not a signal) as opposed to a limitation on data storage persistency (e.g. RAM vs ROM).

As used herein, "at least one of the following:<a list of two or more elements>" and "at least one of: <a list of two or more elements>" and similar wording, where the list of two or more elements are joined by "and", or "or", mean at least any one of the elements, or at least any two or more of the elements, or at least all of the elements.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising:
means for receiving, from a server, an authorisation request for a federated learning operation, the authorisation request identifying a plurality of user equipments;
means for determining, using subscription data associated with each of the plurality of user equipments, whether each of the plurality of user equipments are authorised to be used by the server for the federated learning operation; and
means for, in response to determining that at least two of the plurality of user equipments are authorised, providing a message to each of the at least two of the plurality of user equipments that are authorised, each message comprising an encryption key associated with the federated learning operation.

2. The apparatus according to claim 1, wherein the apparatus comprises:
means for generating the encryption key, for the message to be provided to each of the at least two of the plurality of user equipments.

3. The apparatus according to claim 1 or claim 2, wherein the apparatus comprises:
means for generating an identity for a session, the session associated with the federated learning operation, the identity for the session being provided in the message to each of the at least two of the plurality of user equipments.

4. The apparatus according to any of claim 1 to 3, wherein the message comprises an identity of the server.

5. The apparatus according to any of claims 1 to 4, wherein the authorisation request comprises an identity of a machine learning model for the federated learning operation, and wherein the message comprises the identity of the machine learning model.

6. The apparatus according to any of claims 3 to 5, wherein the apparatus further comprises:
means for, in response to determining that at least two the plurality of user equipments are authorised, generating a record for the federated learning operation, the record comprising at least one of: identities of each of the at least two of the plurality of user equipments, the identity of the machine learning model, the identity of the server, the identity of the session, and the encryption key associated with the federated learning operation.

7. The apparatus according to any of claims 1 to 6, wherein the apparatus further comprises:
means for determining which access and mobility management functions each of the at least two of the plurality of user equipments are registered at, using unified data management queries.

8. The apparatus according to any of claims 1 to 7, wherein the authorisation request comprises an identity of the federated learning operation, the identity of the server, and identities for each of the at least two of the plurality of user equipments.

9. The apparatus according to any of claims 1 to 8, wherein the apparatus further comprises:
means for receiving a confirmation message indicating which of the at least two of the plurality of user equipments successfully received the message; and
means for, in response to the received confirmation message, providing, to the server, i) an indication of which of the at least two of the plurality of user equipments successfully received the message, and ii) the identity of the session.

10. The apparatus according to any of claims 1 to 9, wherein the message comprises an identity of the respective user equipment receiving the message; and/or the encryption key is a secret key; and/or the messages to each of the at least two of the plurality of user equipments are provided via an access and mobility management function service.

11. An apparatus comprising:
means for receiving, from a network function, a message comprising an encryption key associated with a federated learning operation;
means for receiving, from the server, a machine learning model of the federated learning operation;
means for training the machine learning model at the user equipment to output model parameters;
means for encrypting the model parameters using the encryption key; and
means for providing the encrypted model parameters to the server.

12. The apparatus according to claim 11, wherein the message comprises at least one of: an identity of the server, and an identity for a session, wherein the session is associated with the federated learning operation.

13. The apparatus according to claim 11 or claim 12, wherein the apparatus further comprises:
means for receiving, from the server, aggregated encrypted model parameters of a plurality of user equipments.

14. The apparatus according to any of claims 11 to 13, wherein the apparatus further comprises:
means for decrypting the aggregated encrypted model parameters using the encryption key.

15. An apparatus comprising:
means for providing, to a network function, an authorisation request for a federated learning operation, the authorisation request identifying a plurality of user equipments;
means for, in response to receiving a confirmation message, providing a machine learning model of the federated learning operation to at least two of the plurality of user equipments;
means for receiving, from each of the at least two of the plurality of user equipments, encrypted model parameters associated with the machine learning model;
means for aggregating the encrypted model parameters from each of the at least two of the plurality of user equipments together.
